# EUROPEAN PATENT APPLICATION

(11) **EP 2 472 502 A1**
(43) Date of publication of application: **04.07.2012**
(21) Application number: 11195731.2
(22) Date of filing: 27.12.2011
(51) Int. Cl.: G09G 3/36, G02F 1/1345

(54) **Image display device**

(30) Priority: 28.12.2010 JP 2010292952
(71) Applicant: Funai Electric Co., Ltd., Daito-shi Osaka 574-0013 (JP)
(72) Inventor: Kono, Katsuya, Daito-shi, Osaka 574-0013 (JP)
(74) Representative: Grünecker, Kinkeldey, Stockmair & Schwanhäusser

(57) **Abstract**

An image display device comprises multiple gate lines each of which corresponds to each pixel line along the vertical directions in the display panel, and each of which transmits a scan signal to the pixels of each pixel line. Transmission directions of the scan signals of each two adjacent gate lines are opposite to each other. Accordingly, even though the waveform distortion of the scan signal causes display unevenness between the near side and the far side of the transmission direction of the scan signal in each pixel line, the direction of the gradation of each two adjacent pixel lines corresponding to each two adjacent gate lines are opposite to each other. Thus, the display unevenness of the display panel is totally balanced regardless of the size of the display panel, so that the display unevenness of the display panel can be reduced.

## Description

### BACKGROUND OF THE INVENTION

### 1. Field of the Invention

The present invention relates to an image display device which displays an image on a display panel.

### 2. Description of the Related Art

An image display device is known which comprises not only a display panel comprising a matrix of multiple liquid crystal pixels (hereinafter referred to simply as "pixels") arranged in rows and columns, but also a driver for driving the multiple pixels to display an image on the display panel. Generally, the driver includes a gate driver and a source driver. The image display device further comprises multiple gate lines each of which corresponds to each pixel row (each pixel line along the horizontal direction) in the display panel. The gate driver transmits a scan signal sequentially to pixels in each pixel row via each gate line so as to sequentially scan pixels in each pixel row. The image display device furthermore comprises multiple data lines each of which corresponds to each pixel column (each pixel line along the vertical direction) in the display panel. The source driver transmits an image data sequentially to a pixel on the scanned pixel row in each pixel column via each data line (refer to e.g. Japanese Laid-open Patent Publication Hei 2-244024).

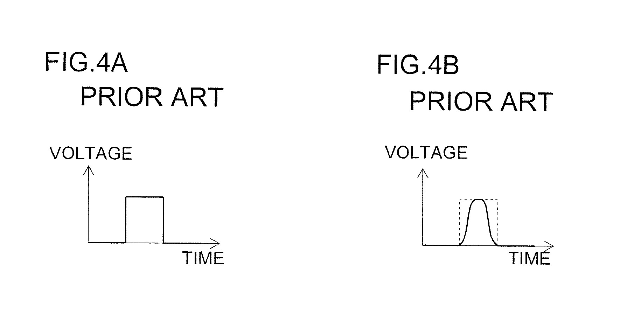

However, the above-described conventional image display device has the following problem. When a scan signal of a square wave as shown in FIG. 4A is applied to the gate lines of the image display device, the waveform of the scan signal becomes more distorted due to the resistance of each gate line as shown in FIG 4B as the transmission distance increases. This signal waveform distortion sometimes causes shortage of voltage to be applied to liquid crystal, so that brightness unevenness or color unevenness (hereafter referred to collectively as "display unevenness") sometimes appears on the display panel.

The above-described problem can occur in both a simple (passive) matrix drive type image display device and an active matrix drive type image display device. In the simple matrix drive type image display device, the gate lines and the data lines are disposed to face each other via liquid crystal and bisect each other at right angles. Each intersection of the gate lines and the data lines forms each pixel on the display panel. A potential difference between the gate line and the data line on each intersection is applied to the liquid crystal at each intersection. Accordingly, in the case where the voltage of the scan signal is higher than the voltage of the image data, the more the waveform of the scan signal is distorted, the less the above-described potential difference becomes, so that the voltage applied to the liquid crystal at each intersection becomes lower.

On the other hand, in the active matrix drive type image display device, the gate lines and the data lines are disposed to bisect each other at right angles on the substrate. This type of image display device has a TFT (thin film transistor) as a switching device at each intersection of the gate lines and the data lines forms. A pixel electrode is connected to the TFT. When the TFT is switched to a conducting state by the scan signal, the voltage corresponding to the image data is applied to the pixel electrode. The voltage charges a capacitor of the pixel electrode, so that the voltage of the charged capacitor is applied between the pixel electrode and a common electrode facing the pixel electrode via liquid crystal. Accordingly, the more the waveform of the scan signal is distorted, the shorter the duration of the conduction time of the TFT becomes, so that charging the capacitor by the voltage corresponding to the image data becomes insufficient. Accordingly, the voltage applied to the liquid crystal becomes lower.

On the other hand, in the field of the image display device whose display panel has a rectangular shape, Japanese Laid-open Patent Publication 2003-195829 and Hei 10-301088 disclose a type of image display device. In this type of image display device, the length of each of the gate lines is shortened by disposing each of the gate lines so that each of these lines corresponds to each pixel line along shorter direction of the display panel. Thus, the transmission distance of the scan signal is shortened, so that the waveform distortion of the scan signal is reduced.

However, in the image display device disclosed in the above-described Japanese Laid-open Patent Publication 2003-195829 and Hei 10-301088, the larger the display panel is, the longer the length of each of the gate lines is, so that it becomes more difficult to reduce the waveform distortion of the scan signal in order to reduce the display unevenness of the display panel.

### BRIEF SUMMARY OF THE INVENTION

An object of the present invention is to provide an image display device which can reduce display unevenness of a display panel regardless of the size of the display panel.

According to the present invention, this object is achieved by an image display device comprising: a display panel comprising a matrix of multiple pixels arranged in horizontal and vertical directions; a driving means for driving the multiple pixels to display an image on the display panel; multiple gate lines each of which corresponds to each pixel line along one of the horizontal and vertical directions in the display panel, and each of which transmits a scan signal to the each pixel line; and multiple data lines each of which transmits an image data to each pixel in the each pixel line to which the scan signal is transmitted by each of the multiple gate lines.

The transmission directions of the scan signals of each two adjacent gate lines in the multiple gate lines are opposite to each other.

With the above described configuration, even though the waveform distortion of the scan signal proportional to the length of each of the multiple gate lines causes display unevenness between the near side and the far side of the transmission direction of the scan signal in each pixel line corresponding to each of the multiple gate lines, the direction of the gradation (both the direction in which the brightness or the color density is higher and the direction in which the brightness or the color density is lower) of each two adjacent pixel lines corresponding to each two adjacent gate lines are opposite to each other. Thus, the display unevenness of the display panel is totally balanced regardless of the size of the display panel, so that the display unevenness of the display panel can be reduced.

Preferably, the display panel has a rectangular shape, and wherein each of the multiple gate lines corresponds to each pixel line along shorter direction of the display panel.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a front elevational view of an image display device according to an embodiment of the present invention;
FIG. 2 is an electrical block diagram of the image display device;
FIG. 3 is a circuit diagram of the display panel, the gate driver and the source driver of the image display device;
FIG. 4A is a graph showing an ideal waveform of a scan signal; and
FIG. 4B is a graph showing a distorted waveform of the scan signal in a conventional image display device.

### DETAILED DESCRIPTION OF THE INVENTION

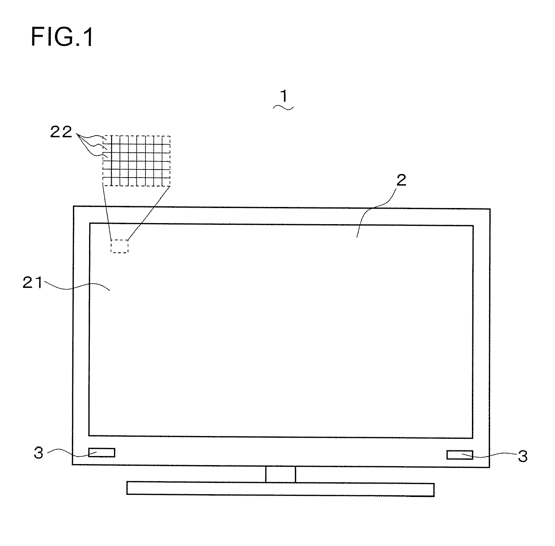

Referring now to FIG. 1 to FIG. 3, an image display device embodying the present invention is described. In this embodiment, the image display device is applied to a television receiver. It is to be noted that the following description of preferred embodiment of the present invention has been presented for purposes of illustration and description, and is not intended to be exhaustive or to limit the present invention to the precise form disclosed.

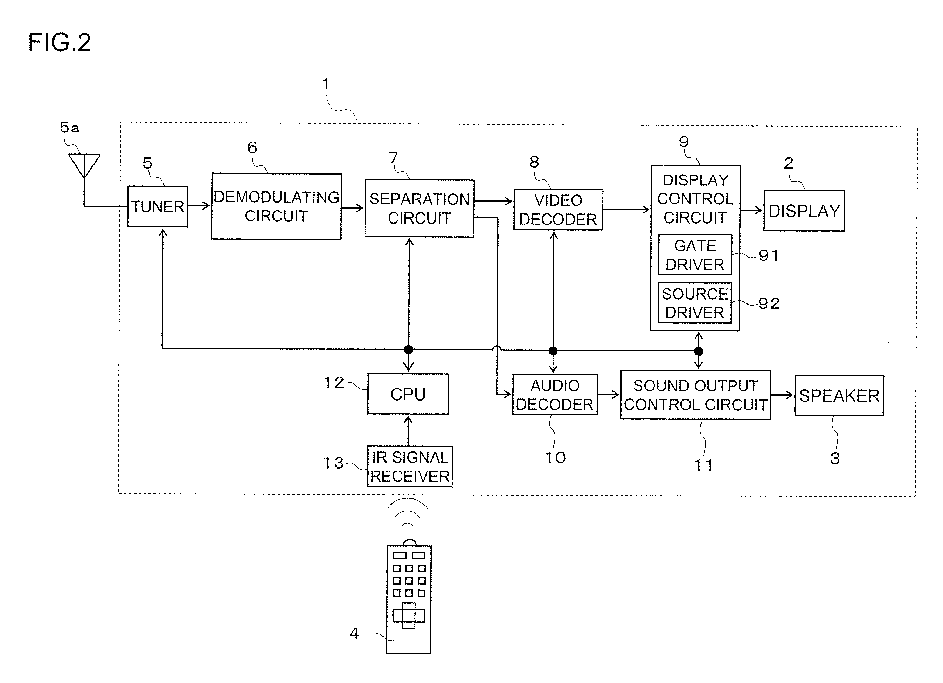

FIG. 1 is a front elevational view of an image display device according to the present embodiment. The image display device 1 comprises a display 2 and a speaker 3. The display 2 consists of a liquid crystal display The display 2 has a display panel 21. The display panel 21 comprises a matrix of multiple liquid crystal pixels 22 (hereinafter referred to simply as "pixels") arranged in rows and columns (in horizontal and vertical directions). The display panel 21 has a horizontally long rectangular shape. The number of pixels 22 arranged in each row (in the horizontal direction) is more than the number of pixels 22 arranged in each column (in the vertical direction). The shape of the display panel 21 is not limited to a horizontally long rectangular shape, and can be, for example, a vertically long rectangular shape. The image display device 1 further comprises a remote control (refer to FIG. 2) for remote-controlling the image display device 1.
FIG. 2 is an electrical block diagram of the image display device 1. As well as the display 2, the speaker 3, and the remote control 4, the image display device 1 comprises a tuner 5 which receives digital television broadcast signals (hereinafter referred to simply as "broadcast signals") via an antenna 5a, a demodulating circuit 6 which demodulates the broadcast signals received by the tuner 5, and a separation circuit 7 which separates the broadcast signals demodulated by the demodulating circuit 6 into video data and audio data.

The image display device 1 further comprises a video decoder 8 which decodes the video data separated by the separation circuit 7, a display control circuit 9 which controls the display 2 to display an image based on the video data decoded by the video decoder 8, an audio decoder 10 which decodes the audio data separated by the separation circuit 7, and a sound output control circuit 11 which controls the speaker 3 to output sound based on the audio data decoded by the audio decoder 10.

The image display device 1 further comprises a main CPU (central processing unit) 12 (hereinafter referred to simply as "CPU") which controls respective units of the image display device 1, and an infrared (IR) signal receiver 13 which receives infrared signals transmitted from the remote control 4 by wireless and converts the received infrared signals into electrical signals to output the converted electrical signals to the CPU 12. The above-described infrared signals include various instruction signals generated based on user operation.

The display control circuit 9 comprises a gate driver 91 and a source driver 92 (claimed driving means) for driving the pixels 22 arranged in a matrix state on the display panel 21 to display an image on the display panel 21. In this embodiment, the drive type of the pixels 22 is active matrix drive type. However, the drive type of the pixels 22 is not limited to the active matrix drive type, and can be, for example, simple (passive) matrix drive type. Scanning method of the display 2 can be either interlaced scanning or non-interlaced scanning (progressive scanning).

The CPU 12 makes the tuner 5 tune in to the channel to be received, based on the instruction signal (infrared signal) from the remote control 4. Furthermore, the CPU 12 controls the display control circuit 9 and the sound output control circuit 11 so as to control not only image display on the display 2 but also the sound output of the speaker 3.

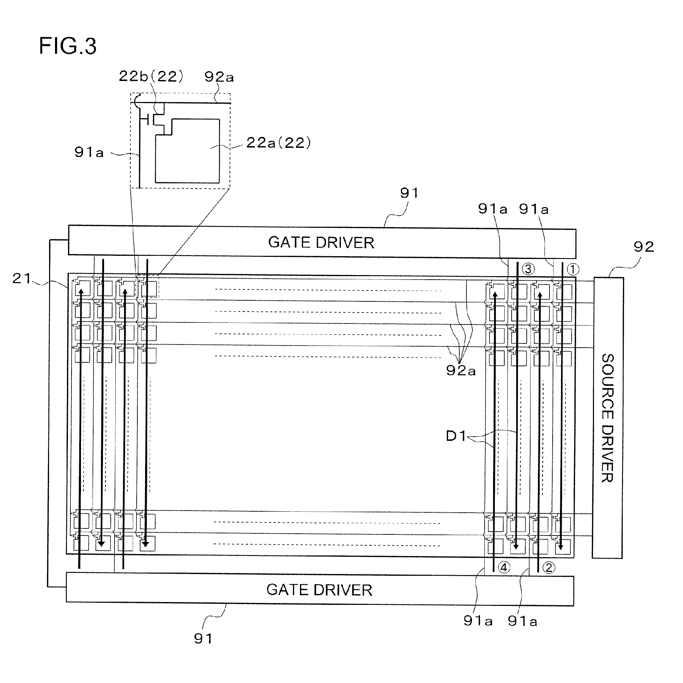

FIG. 3 is a circuit diagram of the display panel 21, the gate driver 91 and the source driver 92. Each pixel 22 on the display panel 21 comprises a pixel electrode 22a for applying the voltage corresponding to the image data to liquid crystal, and a TFT (thin film transistor) 22b whose drain is connected to the pixel electrode 22a.

The gate driver 91 comprises multiple gate lines 91a for transmitting a scan signal to the pixels 22. Each of the gate lines 91a is disposed to correspond to each pixel line of the pixels 22 along the vertical direction in the display panel 21. In other words, each of the gate lines 91a is disposed to correspond to each pixel line of the pixels 22 along shorter direction of the display panel 21. Each of the gate lines 91a is shared by the pixels 22 of the pixel line corresponding to the gate line 91a. Each of the gate lines 91a transmits a scan signal to the pixels 22 of each pixel line.

The gate driver 91 consists of two drivers. One of the drivers inputs the scan signal into one end of the gate line 91a, the other of the drivers inputs the scan signal into the other end of the gate line 91a. The gate lines 91a and the two drivers making up the gate driver 91 are configured so that the driver which inputs the scan signal into the gate line 91a is switched back and forth between the two drivers every other line. Thus, the scan signal transmission directions D1 (shown by arrows) of each two adjacent gate lines 91a in the multiple gate lines 91a are opposite to each other.

The source driver 92 comprises multiple source lines 92a (claimed data lines) each of which transmits an image data to each pixel 22 (in the each pixel line) to which the scan signal is transmitted by each of the multiple gate lines 91a. Each of the source lines 92a is disposed to correspond to each pixel line of the pixels 22 along the horizontal direction in the display panel 21. Each of the source lines 92a is shared by the pixels 22 of the pixel line corresponding to the source line 92a. Note that the above-described image data is an image data of each frame composing the video data decoded by the video decoder 8. Not only the gate driver 91 but also the source driver 92 can be mounted on an FPC (flexible printed circuit) using a COF (chip on film) method.

In the above-described display panel 21, when the scan signal is applied to the gate of each TFT 22b via each of the gate lines 91a, it becomes the state that the image data can be written in the pixel electrode 22a connected to the TFT 22b. When the source driver 92 applies the image data to the source of each TFT 22b in this state, the image data is written in the pixel electrode 22a via the drain of the TFT 22b. The written image data is stored as an electrical charge on a capacitor (not shown) provided in the pixel electrode 22a. The voltage based on the electrical charge stored on the capacitor is applied to liquid crystal as a drive voltage. Thus, orientation control of the liquid crystal is performed to control the amount of light transmitted through the liquid crystal. This control is done on an independent pixel basis so that an image is displayed on the display panel 21.

Suppose that the waveform of the scan signal is distorted due to the resistance of each gate line 91a proportional to the transmission distance on the gate line 91a, so that brightness unevenness or color unevenness (hereafter referred to collectively as "display unevenness") appears between the near side (the base side of the arrow) and the far side (the top side of the arrow) of the scan signal transmission direction D1 in each pixel line (of the pixels 22) corresponding to each of the gate lines 91a. According to the present embodiment, because the scan signal transmission directions D1 of each two adjacent gate lines 91a are opposite to each other, the direction of the gradation (both the direction in which the brightness or the color density is higher and the direction in which the brightness or the color density is lower) of each two adjacent pixel lines corresponding to each two adjacent gate lines 91a are opposite to each other. Thus, even though the above-described display unevenness appears, the display unevenness of the display panel 21 is totally balanced regardless of the size of the display panel 21, so that the display unevenness of the display panel 21 can be reduced.

Additionally, because each of the gate lines 91a is disposed to correspond to each pixel line (of the pixels 22) along the shorter direction of the display panel 21, the length of each of the gate lines 91a can be shortened, compared to the case where each of the gate lines 91a is disposed to correspond to each pixel line along the longer direction of the display panel 21. Thus, the transmission distance of the scan signal can be shortened, compared to the case where each of the gate lines 91a is disposed to correspond to each pixel line along the longer direction of the display panel 21. Accordingly, compared to the case where each of the gate lines 91a is disposed to correspond to each pixel line along the longer direction of the display panel 21, the waveform distortion of the scan signal can be more reduced, so that the display unevenness of the display panel 21 can be more reduced.

It is to be noted that the present invention is not limited to the above-described specific embodiments. For example, the present invention can be applied not only to the television receiver, but also a simple display monitor. Further, an organic light emitting display can be used as the display 2, and the pixel 22 can be an organic electro-luminescence device.

Furthermore, each of the gate lines 91a can be disposed to correspond to each pixel line of the pixels 22 along the horizontal direction in the display panel 21. Further, the shorter direction of the display panel 21 is not limited to the vertical direction in the display panel 21, but can be the horizontal direction in the display panel 21. In the case where the shorter direction of the display panel 21 is the horizontal direction in the display panel 21, it is preferable that each of the gate lines 91a is disposed to correspond to each pixel line along the horizontal direction in the display panel 21.

## Claims

1. An image display device (1) comprising:
a display panel (21) comprising a matrix of multiple pixels (22) arranged in horizontal and vertical directions;
a driving means (91, 92) for driving the multiple pixels (22) to display an image on the display panel (21);
multiple gate lines (91 a) each of which corresponds to each pixel line along one of the horizontal and vertical directions in the display panel (21), and each of which transmits a scan signal to the pixels (22) of the each pixel line; and
multiple data lines (92a) each of which transmits an image data to each of the pixels (22) to which the scan signal is transmitted by each of the multiple gate lines (91 a),
**characterized in that**
transmission directions of the scan signals of each two adjacent gate lines in the multiple gate lines (91a) are opposite to each other.

2. The image display device (1) according to claim 1,
wherein the display panel (21) has a rectangular shape, and
wherein each of the multiple gate lines (91a) corresponds to each pixel line along shorter direction of the display panel (21).
